# EUROPEAN PATENT SPECIFICATION

(11) **EP 1 657 128 B1**
(45) Date of publication and mention of the grant of the patent: **15.10.2008**
(21) Application number: 04026646.2
(22) Date of filing: 10.11.2004
(51) Int. Cl.: B60R 25/10

(54) **Burglar alarm using power cord to transmit signals and method for controlling the same**
Diebstahlwarnvorrichtung mit Übertragung von Signalen mittels einer Stromversorgungsleitung und Steuerverfahren dazu
Dispositif d'alarme antivol utilisant une ligne d'alimentation pour transmettre des signaux et procédé de commande du dispositif

(43) Date of publication of application: 17.05.2006
(73) Proprietor: Lu, Shu-Chen, San Chung Taipei Shien (TW)
(72) Inventor: Chen, Tse-Hsing, San Chung Taipei Shien (TW)
(74) Representative: Sroka, Peter-Christian

(56) References cited:
- GB-A- 2 274 529
- US-A- 4 463 340
- US-A- 5 677 663
- US-A1- 2004 075 541
- US-B1- 6 608 555

## Description

### FIELD OF THE INVENTION

The present invention relates to a wireless burglar alarm on a car, and more particularly to a burglar alarm using power cord to transmit signals and a method for controlling the burglar alarm. In the method of the present invention, different frequencies are used as codes 1 and 0, or a base frequency and different wave widths are used as codes 1 and 0 to allow carrying of such code signals over a power cord connected to the burglar alarm, so that drilling on the firewall of a car and mutual interference between a main unit and a horn of the burglar alarm could be avoided.

### BACKGROUND OF THE INVENTION

Most of the currently available burglar alarms include a horn output line, which is connected to a siren horn for the latter to make a loud sound as a warning signal. To install the burglar alarm on a car, it is necessary to extend the horn output line from an interior of the car into an engine chamber via a firewall, and finally connect the horn output line to the siren horn. To enable successful extending of the horn output line through the firewall, it is necessary to expand a wiring hole and/or an engine hood opening stay hole originally provided on the firewall. Sometimes, it is even necessary to drill a new hole on the firewall to complete the installation of the burglar alarm. The expanding and drilling of holes on the firewall not only requires additional time and labor, but also spoils or damages the original airtight and watertight ability of the firewall to disadvantageously admit exhaust and wastewater to the car.

A solution to the problems of additional installing time and labor as well as spoiling the original airtight and watertight ability of the firewall is to design the siren horn as a wireless component for wirelessly transmitting warning signals. It is possible to control the wireless siren horn via a main unit of the burglar alarm simply by electrically connecting the siren horn to positive and negative electrodes of the battery of the car.

Moreover, to avoid mutual interference between the wireless siren horn and the main unit of the burglar alarm, the siren horn and the main unit must be designed to work at considerably different radio frequencies.

The US 6,608,555 B1 shows a vehicle security system including a detector circuit cluster, an alarm circuit cluster and a host device, all connected to a common power supply. The detector circuit cluster includes a detector circuit for detecting a current state of a respective component of the vehicle. The detector circuit can receive a status request signal and transmit a status response signal corresponding to the detected state of the respective component. The alarm circuit cluster is enabled upon receipt of an alarm enable signal for generating an alarm output. The host device can transmit the status request signal for the detector circuit, receive the status response signal from the detector circuit, and selectively transmit the alarm enable signal in accordance with the status response signal.

The GB 2 274 529 A describes a vehicle immobiliser system, comprising a security-code transmitting device and one or more receiver devices, employed to respond to the transmitted code. However, it is possible for the code transmitting device to use existing vehicle wiring with which to convey this code. The receiver units, upon receiving this communication, compare the received code to that which they have been previously programmed to accept, a valid comparison resulting in uninhibited vehicle use. If, however, the required code is not detected by the receiving units, vehicle functions shall remain inhibited by them, thus rendering the vehicle non-driveable. The code-data can be both transmitted and received through vehicle wiring by exploiting the Frequency-Shift-Keying (F.S.K.) signaling technique, Pulse-Position-Modulation (P.P.M.) signaling technique or Pulse-Coded-Modulation (P.C.M.) signaling technique.

However, in some countries, only a certain band or a certain frequency is allowed for the purpose of wireless burglar alarm. In this case, the wireless siren and the main unit of the burglar alarm having the same frequency must be actuated at different time to avoid interference with each other. A serious problem with the latter case is the siren horn could not operate as soon as an instruction is received from the main unit and therefore has largely reduced function.

Another way to overcome the above-mentioned problems is to use a power cord to transmit codes for the siren horn to make warning sounds. However, the power cord also carries noises that cause deformation in the magnitude of high and low voltages and therefore prevent the high and low voltages from being used as code 1 (one) and code 0 (zero), respectively.

It is therefore tried by the inventor to develop a burglar alarm using power cord to transmit signals and a method for controlling the burglar alarm.

### SUMMARY OF THE INVENTION

A primary object of the present invention is to provide a burglar alarm using power cord to transmit signals. In the burglar alarm of the present invention, either two different frequencies are separately used as codes 1 and 0, or a specific frequency is used as a base frequency while different wave widths are separately used as codes 1 and 0. In this manner, additional wiring for the burglar alarm is eliminated to save time and labor for installing thereof, and drilling of holes on the firewall is also eliminated to maintain the airtight and watertight ability of the firewall. Moreover, the problems of mutual interference between the siren horn and the main unit of the burglar alarm using the same radio frequency, and asynchronous movement of the siren horn and the main unit due to the same or similar frequencies thereof could therefore be avoided.

To achieve the object, the burglar alarm provided by the present invention mainly includes a main unit, in which a power supply voltage regulator circuit, a central processing unit (CPU) circuit, a field effect transistor (FET) driving circuit, and an RLC (Resistance-Inductance-Capacitance) oscillation circuit are provided to convert digital signals into analog signals, which are then amplified to be carried via a power cord; and a wireless decoding horn, in which a power supply voltage regulator circuit, a reference voltage circuit, an RLC oscillation circuit, a comparison circuit, a CPU circuit, and a horn voice driving circuit are provided to decode and compare a received warning signal, and drive the horn to make vocal and sounding warnings.

Another object of the present invention is to provide a method for controlling the above-mentioned burglar alarm using power cord to transmit signals.

To achieve this object, either different frequencies are separately used as codes 1 and 0, or a specific frequency is used as a base frequency while different band widths are separately used as codes 1 and 0, so that warning signals could be conveniently carried via a power cord without being interfered by noises to quickly and accurately actuate the burglar alarm.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a block diagram of a main unit of the burglar alarm using power cord to transmit signals according to the present invention;
Fig. 2 is a circuit diagram of the main unit of the present invention;
Fig. 3 is a block diagram of a wireless decoding horn of the burglar alarm using power cord to transmit signals according to the present invention; and
Fig. 4 is a circuit diagram of the wireless decoding horn of the present invention.

### DETAILED DESCRIPTION OF THE PREFERRED EMBODIMENTS

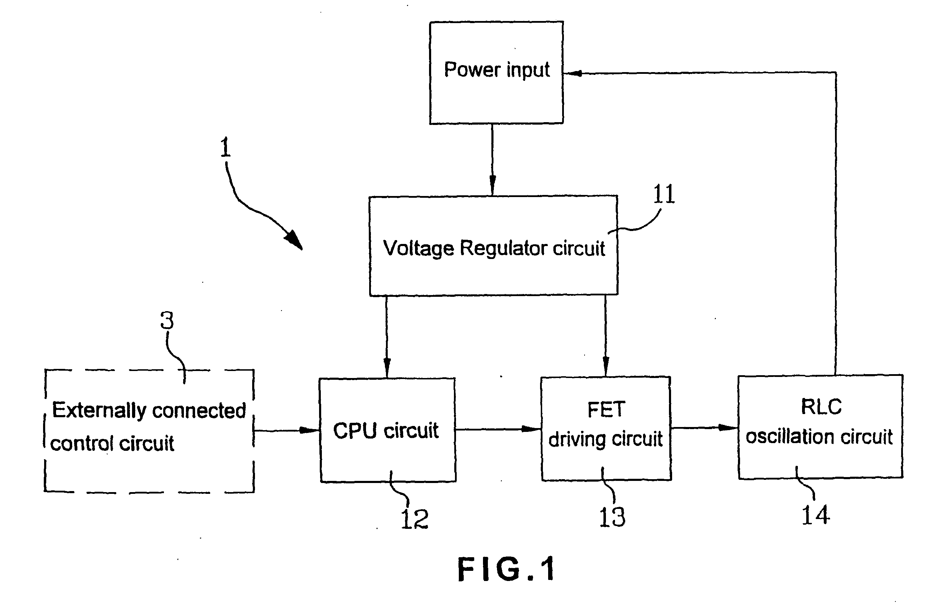

Please refer to Figs. 1 to 4 in which a burglar alarm using power cord to transmit signals according to the present invention is shown. As shown, the burglar alarm of the present invention mainly includes a main unit 1 and a wireless decoding horn 2.

The main unit 1 includes a power supply voltage regulator circuit 11 for supplying power needed by different sections of the main unit 1; a CPU circuit 12 for encoding and receiving instructions from an externally connected control circuit 3, and generating digital codes having a specific frequency from received signals; an FET driving circuit 13 for amplifying the digital codes; and an RLC oscillation circuit 14 for converting the digital signals into analog signals, which are amplified and coupled from a primary coil to a secondary coil of a transformer before being carried via a power cord.

The wireless decoding horn 2 is internally provided with a power supply voltage regulator circuit 21 for supplying power needed by different sections of the wireless horn 2; a reference voltage circuit 22 for providing a reference voltage used as a basis in comparison; an RLC oscillation circuit 23 for retrieving the analog code signals from the power cord, filtering off the voltage across the power cord, and amplifying the remained code signals; a comparison circuit 24 for converting the analog code signals into digital code signals; a CPU circuit 25 for decoding and comparing a received burglar-alarming signal with the reference voltage; and a horn voice driving circuit 26 for driving a horn 27 to make vocal and sounding warnings.

With the above arrangement, the burglar alarm using power cord to transmit signals according to the present invention could be controlled through using different frequencies as codes 1 and 0, or using a specific frequency as a base frequency while using different wave widths as codes 1 and 0, so that the burglar-alarming signals could be conveniently carried by a power cord without being interfered by noises on the power cord.

Fig. 1 shows the operational principle of the main unit 1 of the burglar alarm of the present invention. A power input passes the voltage regulator circuit 11 to supply voltage required by the entire circuitry of the main unit 1 to work. The CPU circuit 12 includes an electrically erasable programmable read-only memory (EEPROM) adapted to encode and receive instructions from an externally connected control circuit 3. Codes encoded by the CPU circuit 12 are send to the FET driving circuit 13 and then the RLC oscillation circuit 14, so that digital signals in the form of codes 0 and 1 are converted into analog signals and carried via a power cord, via which the codes are transmitted.

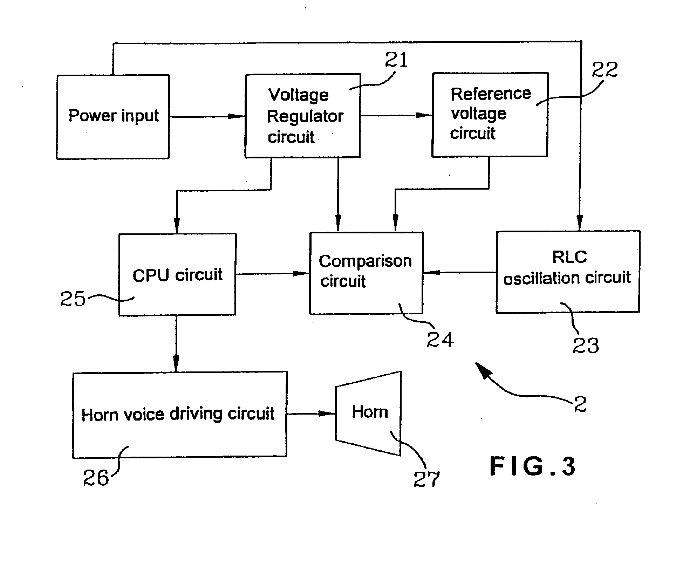

Fig. 3 shows the operational principle of the wireless decoding horn 2 of the burglar alarm of the present invention. The wireless decoding horn 2 is electrically connected to the power cord so as to obtain a power input, which passes the voltage regulator circuit 21 to provide working voltage and comparing voltage needed by the entire circuitry of the wireless decoding horn 2. The codes carried by the power cord pass the RLC oscillation circuit 23 and the comparison circuit 24, so that the analog signal codes are converted into digital signals, which are then decoded by the CPU circuit 25. The correct signals are sent to the horn voice driving circuit 26 to drive the horn 27 to make required warning sounds.

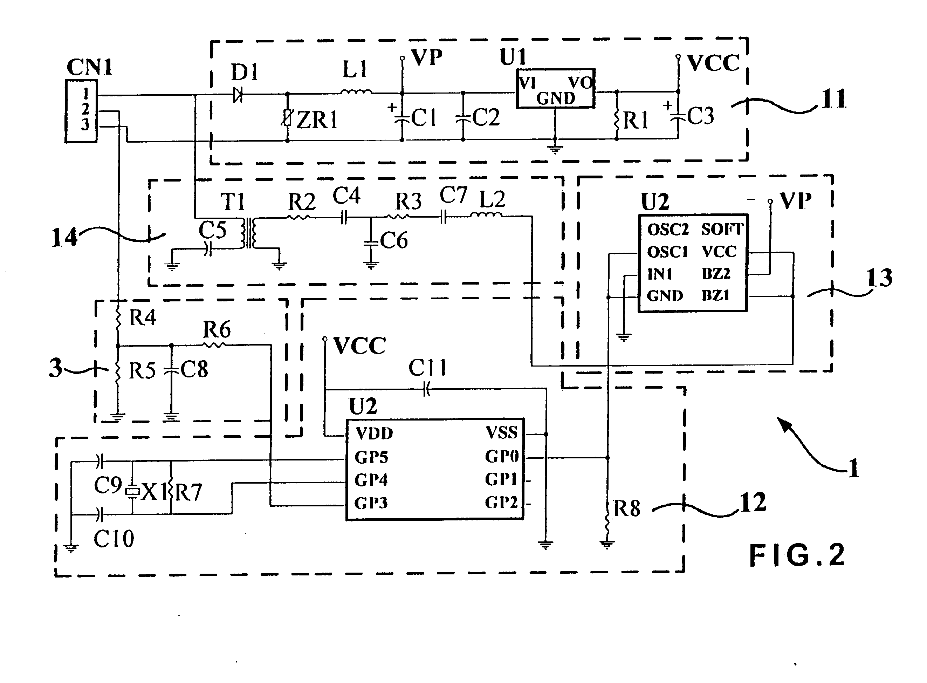

Fig. 2 is a circuit diagram showing detailed circuit configuration of the main unit 1 of the burglar alarm of the present invention. The power is input via D1, at where reverse-current protection is provided, and then passes ZR1 for noise filtering. L1, C1, and C2 are filters, and U1 is an IC for reducing and stabilizing voltage. The power input with reduced and stabilized voltage passes R1 and C3 and is filtered to supply stable voltage required by the whole circuitry. The externally input control signals pass R4 and R5 that serve as input impedance and divide the voltage. The input control signals are then filtered at C8 and sent to the CPU circuit 12 via R6. C9, C10, X1, and R7 provide the oscillating frequency required by a CPU of the CPU circuit 12, so that digital codes having a specific frequency is generated from the input signals via the CPU.

In implementation of the present invention, a square wave of, for example, 55kHz may be used to represent code 1, and a square wave of 60kHz maybe used to represent code 0. Of course, signals of other frequencies may be otherwise used to represent code 1 or 0. Alternatively, a specific frequency, such as 55kHz, may be used as a base frequency, and different wave widths are used as codes 1 and 0. The purpose to use different frequencies to represent codes 1 and 0, or to use a certain frequency as a base frequency and different wave widths as codes 1 and 0 is to enable convenient modulation of the signals for carrying via a power cord while being distinguishable from noises, so that the noises do not interfere with the codes.

The generated digital codes are then sent to U2 of the FET driving circuit 13 and amplified to produce sufficient current for driving the RLC oscillation circuit 14 that consists of L2, C4, C5, and C6. R3 and R2 are impedance match. The input digital codes pass the RLC oscillation circuit 14 formed from L2, C4, C5, and C6, and are converted into analog signals, which are amplified again at R2 to have sufficient electric energy for coupling from the primary coil to the secondary coil of the transformer T1, and therefore be carried via the power cord. As a result, when the CPU circuit 12 is sending signals, the code signals exist on all the power cords of the car. Therefore, the wireless horn 2 could be connected to any point on any power cord to receive the signals from the main unit 1 via the power cord without the need of additional wiring for signal transmission. The burglar alarm of the present invention is therefore very convenient for use.

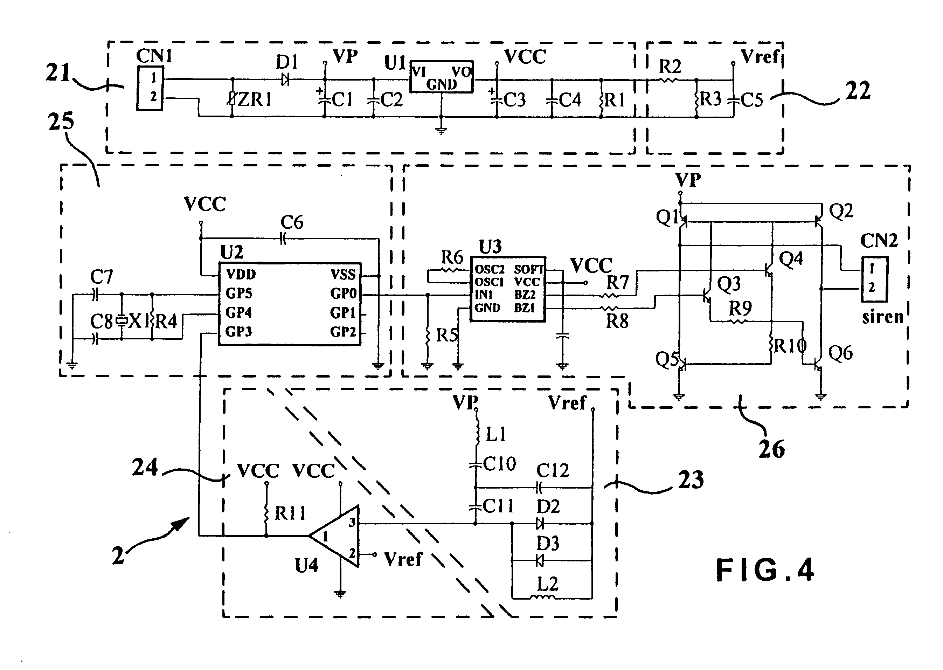

Please refer to Fig. 4 that is a detailed circuit diagram of the wireless decoding horn 2 of the burglar alarm of the present invention. The power input passes ZR1 for noise filtering. Reverse-current protection is provided at D1. The noise-filtered power supply is filtered at C1 and C2, and voltage-reduced at U1, and then filtered again at C3, C4, and R1 to supply the working voltage required by the whole circuitry of the wireless decoding horn 2. The working voltage is divided at R2, R3, and filtered again at C5 to, supply the comparison circuit 24 with required comparing voltage. The analog code signals carried via the power input are obtained via the RLC oscillation circuit 23 formed from L1, C10, C11, C12, D2, D3, and L2. The RLC oscillation circuit 23 not only filters the initial voltage over the power cord but also amplifies the remained code signals, which are sent to U4 of the comparison circuit 24 and be converted from analog code signals into digital code signals, which are then sent to the CPU circuit 25 formed from X1, C7, C8, and R4 for discrimination and decoding. Thereafter, the correct signals are sent to U3, which is a voice IC, and Q1, Q2, Q3, Q4, Q5, and Q6 of the horn voice driving circuit 26 to drive the horn 27 to make required warning sounds.

The following are some of the advantages of the present invention:
1. The transmission of signals via a power cord not only eliminates additional wiring to save time and labor for installing the burglar alarm, but also prevents the firewall from drilling to maintain its original airtight and watertight ability. Moreover, the problem of mutual interference or asynchronous movement between the main unit and the wireless decoding horn of the burglar alarm due to the same radio frequency thereof could be overcome for the horn to correctly make required warning sounds as soon as an instruction signal is received from the main unit.
2. The use of different frequencies to represent codes 1 and 0, or the use of a specific frequency as the base frequency and different wave widths as codes 1 and 0 not only enables convenient carrying of the signals via the power cord, but also enables distinguishing of the signals from noises that are characterized by signal voltage amplitude. Thus, the signals transmitted via the power cord are not interfered by the noises.
3. In addition to the wireless burglar alarm, the transmission of signals via a power cord may also be employed to control other electric apparatus on a car, such as, for example, the trunk lid lock, door locks, or other in-car electric equipment, without the need of additional wiring.

The present invention has been described with a preferred embodiment thereof and it is understood that many changes and modifications in the described embodiment can be carried out without departing from the scope of the invention that is intended to be limited only by the appended claim.

## Claims

1. A burglar alarm using power cord to transmit signals, comprising a main unit (1) with a circuit (12) for encoding and receiving instructions from an externally connected control circuit (3) and a horn (2) with a circuit (23) for retrieving analog code signals from the power cord generated by the main unit (1), **characterised by** the main unit (1) being internally provided with a power supply voltage regulator circuit (11) for supplying power needed by different sections of said main unit; a CPU circuit (12) for encoding and receiving instructions from the externally connected control circuit (3), and generating digital codes having a specific frequency from the received signals; an FET driving circuit (13) for amplifying the generated digital codes; and an RLC oscillation circuit (14) for converting the amplified digital code signals into analog signals, which are amplified and then coupled from a primary coil to a secondary coil of a transformer before being carried via a power cord; and
the wireless decoding horn (2) being internally provided with a power supply voltage regulator circuit (21) for supplying power needed by different sections of said wireless decoding horn (2); a reference voltage circuit (22) for providing a reference voltage used as a basis in comparison; an RLC oscillation circuit (23) for retrieving analog code signals from the power cord, filtering off the voltage across the power cord, and amplifying the remained analog code signals; a comparison circuit (24) for converting the analog code signals into digital code signals; a CPU circuit (25) for decoding and comparing a received burglar-alarming signal with said reference voltage; and a horn voice driving circuit (26) for driving a horn (27) to make vocal and sounding warnings;
whereby said burglar alarm could be controlled through using different frequencies as codes 1 and 0, or using a specific frequency as a base frequency while using different wave widths as codes 1 and 0, so that said burglar-alarming signals could be conveniently carried via a power cord without being interfered by noises on the power cord.

## Patentansprüche

1. Ein Einbruchsicherungssystem, das zur Signalübertragung ein Anschlusskabel verwendet, enthaltend eine Haupteinheit (1) mit einer Schaltung (12) zum Codieren und Empfangen von Instruktionen von einer extern angeschlossenen Steuerschaltung (3) und ein Signalhorn (2) mit einer Schaltung (23) zum Abrufen von analogen Codesignalen von dem Anschlusskabel, die von der Haupteinheit (1) erzeugt werden, **dadurch gekennzeichnet, dass** die Haupteinheit (1) intern mit einer Netzanschluss-Spannungsregulierschaltung (11) versehen ist, um den von verschiedenen Abschnitten dieser Haupteinheit benötigten Strom zu liefern;
eine CPU(Zentral-)Schaltung (12) zum Codieren und Empfangen von Instruktionen von der extern angeschlossenen Steuerschaltung (3) und zum Erzeugen von digitalen Codes, die eine spezifische Frequenz von den empfangenen Signalen haben;
einen FET (Feldeffekttransistor-)-Treiberkreis (13) zum Verstärken der erzeugten digitalen Codes;
und einen RLC-Oszillatorkreis (14) zum Umwandeln der verstärkten digitalen Codesignale in Analogsignale, die verstärkt werden und dann von einer Primärspule zu einer Sekundärspule eines Transformators gekoppelt werden, bevor sie über ein Anschlusskabel übertragen werden;
und dass das drahtlose Decodierhorn (2) intern mit einer Netzanschluss-Spannungsregulierschaltung (21) versehen ist, um den von verschiedenen Abschnitten dieses drahtlosen Decodierhorns (2) benötigten Strom zu liefern;
einen Referenzspannungskreis (22), um eine Referenzspannung zu liefern, die als eine Vergleichsbasis verwendet wird;
einen RLC-Oszillatorkreis (23) zum Abrufen von analogen Codesignalen von dem Anschlusskabel, zum Ausfiltern der Spannung im Bereich des Anschlusskabels und zum Verstärken der verbliebenen analogen Codesignale; eine Vergleichsschaltung (24) zum Umwandeln der analogen Codesignalen in digitale Codesignale; eine CPU(Zentral-)Schaltung (25) zum Decodieren und Vergleichen eines empfangenen Einbruchssicherungssignals mit dieser Referenzspannung, und eine Hornsignaltreiberschaltung (26) zum Antreiben eines Horns (27), um vokale und Tonwarnungen zu erzeugen; wobei dieses Einbruchssicherungssystem gesteuert werden kann unter Verwendung unterschiedlicher Frequenzen als Codes 1 und 0 oder unter Verwendung einer spezifischen Frequenz als einer Basisfrequenz, wobei unterschiedliche Wellenweiten als Codes 1 und 0 verwendet werden können, derart dass diese Einbruchsicherungssignale in geeigneter Weise über ein Anschlusskabel übertragen werden können, ohne dass sie durch Geräusche auf dem Anschlusskabel gestört werden.

## Revendications

1. Alarme antivol utilisant un cordon d'alimentation pour transmettre des signaux, comprenant une unité ( 1 ) principale munie d'un circuit ( 12 ) pour coder et recevoir des instructions d'un circuit ( 3 ) de commande connecté extérieurement et un avertisseur ( 2 ) pourvu d'un circuit ( 23 ) permettant d'extraire du cordon d'alimentation des signaux de code analogiques produits par l'unité ( 1 ) principale, **caractérisé par le fait que** l'unité ( 1 ) principale est intérieurement pourvue d'un circuit ( 11 ) régulateur de tension d'alimentation électrique pour délivrer l'alimentation exigée par différentes parties de l'unité principale ;
un circuit ( 12 ) de CPU ( unité centrale ) pour coder et recevoir des instructions du circuit ( 3 ) de commande connecté extérieurement, et pour produire des codes numériques ayant une fréquence spécifique à partir des signaux reçus ;
un circuit ( 13 ) d'attaque à FET ( transistor à effet de champ ) pour amplifier les codes numériques produits ;
et un circuit ( 14 ) d'oscillation RLC pour convertir les signaux de codes numériques amplifiés en des signaux analogiques qui sont amplifiés puis appliqués d'une bobine primaire à une bobine secondaire d'un transformateur avant d'être transportés par l'intermédiaire d'un cordon d'alimentation ; et
le dispositif ( 2 ) avertisseur à décodage sans fil étant pourvu intérieurement d'un circuit ( 21 ) régulateur de tension d'alimentation électrique pour délivrer une alimentation exigée par différentes parties dudit dispositif ( 2 ) avertisseur à décodage sans fil ;
d'un circuit ( 22 ) de tension de référence pour fournir une tension de référence utilisée comme base dans la comparaison ;
d'un circuit ( 23 ) d'oscillation RLC pour extraire des signaux de codes analogiques du cordon d'alimentation, éliminer par filtrage la tension aux bornes du cordon d'alimentation, et amplifier les signaux de codes analogiques restants ;
d'un circuit ( 24 ) de comparaison pour convertir les signaux de codes analogiques en des signaux de codes numériques ;
d'un circuit ( 25 ) de CPU pour décoder et comparer un signal d'alarme antivol reçu à la tension de référence ; et
d'un circuit ( 26 ) d'attaque vocal d'avertisseur pour attaquer un avertisseur ( 25 ) afin de produire des avertissements vocaux et sonores ;
d'où il résulte que l'alarme antivol peut être commandée en utilisant différentes fréquences en tant que codes 1 et 0, ou en utilisant une fréquence spécifique en tant que fréquence de base tout en utilisant des largeurs d'onde différentes en tant que codes 1 et 0, afin que les signaux d'alarme antivol puissent être acheminés de façon appropriée par l'intermédiaire d'un cordon d'alimentation sans brouillage par les bruits présents sur le cordon d'alimentation.
